# EUROPEAN PATENT APPLICATION

(11) **EP 2 056 564 A1**
(43) Date of publication of application: **06.05.2009**
(21) Application number: 07301457.3
(22) Date of filing: 12.10.2007
(51) Int. Cl.: H04L 29/06

(54) **Method for signalling a program identifier in DVB IP**

(71) Applicant: Thomson Licensing, 92100 Boulogne-Billancourt (FR)
(72) Inventor: Bichot, Guillaume, 35630 La Chapelle Chaussee (FR)
(74) Representative: Ruellan-Lemonnier, Brigitte

(57) **Abstract**

The present invention concerns a method in a broadcast network wherein a program is transported in a multicast packet, and wherein the multicast packet is transported in a stream, the stream being identified by a stream identifier, the method being adapted for getting a stream identifier corresponding to a stream, comprising at a terminal the steps of receiving a file comprising a list of programs available, selecting in the file a program and the corresponding multicast address, getting the Stream Identifier indicated in the multicast address and switching to the reception of packets corresponding to the Stream Identifier.

## Description

The present invention relates generally to the digital video broadcasting and in particular to a method for indicating the packet identifier field.

The Digital Video Broadcasting - Terrestrial, noted DVB-T, is a standard for the transmission of digital terrestrial television. It is specified in the standard document ETSI EN 300 744: "Digital Video Broadcasting (DVB); Framing structure, channel coding and modulation for digital terrestrial television" (DVB-T).
Within the digital terrestrial TV context, DVB-H is a DVB-T extension for broadcast services distribution to mobile terminals, also called handheld terminals. DVB-H mainly defines means for reducing power consumption and increasing reliability. It is specified in the standard document ETSI EN 302 304 V1.1.1 (2004-11) Digital Video Broadcasting (DVB); Transmission System for Handheld Terminals (DVB-H). A difference brought by DVB-H over DVB-T is the fact that video and audio are transported in Internet Protocol packets, IP packets. The payload of DVB-H is constituted of IP datagram or other network layer datagram encapsulated into MultiProtocol Encapsulation sections. DVB-H introduces time-slicing, at the LINK layer, in order to reduce the average power consumption of the terminal and to enable smooth and seamless frequency handover.

The time slicing is further described in ETSI standard, EN 301 192 V1.4.1 (2004-11); Digital Video Broadcasting (DVB); DVB specification for data broadcasting. With the time-slicing mechanism a sender sends a burst using the highest possible bit rate to multiple receivers. Time-slicing consists in sending data in bursts using higher instantaneous bit rate compared to the bit rate required if the data were transmitted using traditional streaming mechanisms. To indicate to the receiver when to expect the next burst, the time to the beginning of the next burst is indicated within the burst. Time-slicing enables a receiver to stay active only a fraction of the time, while receiving bursts of a requested service. Between bursts belonging to the same service/stream, a DVB-H receiver may switch off its reception unit in order to save power. Once tuned to a TV service for instance, a terminal saves up to 80 % of power as compared to a DVB-T tuner where the reception unit is continuously on. A time-sliced burst is referred to a DVB-H channel hereinafter. Time slicing then enables a receiver to select a DVB-H channel for receiving a service, and not to listen to the other DVB-H channels.

MPEG2 standards define a method to multiplex various component parts of a multimedia program. A program may comprise various components, such as audio, video and control data. These components are transported in different transport stream packets, called TS packets, all having the same identifier, also called packet identifier or program identifier or PID. The PID is used to uniquely identify the stream to which the packet belongs. In order to receive a particular transport stream, a receiver determines the PID being used. Then it filters packets that have a matching PID value. To help the receiver identify which PID corresponds to which program, Signaling Tables are transmitted with a description of each program carried within the MPEG-2 Transport Stream. At a receiver it is necessary to perform the loading and parsing of DVB/MPEG signaling tables in order to resolve DVB addressing issues. DVB-SI defines the Service Information data which forms a part of DVB bitstreams, so that the user can be provided with information to assist in selection of services and/or events within the bitstream. This is specified in the standard document ETSI EN 300 468: "Digital Video Broadcasting (DVB); Specification for Service Information (SI) in DVB systems" (DVB-SI). In particular, a terminal needs to process several DVB-SI tables to get the DVB-PID (Packet Identifier) that corresponds to an IP address. The terminal also needs to track any change in the tables.

DVB-H specification, as other DVB broadcast specifications, relies on DVB-SI for getting the PID corresponding to a particular IP address. Getting this mapping information takes time and obliges the terminals to be DVB-SI aware. Although the DVB-SI is static in nature, it may change and thus the terminals shall be able to refresh the SI information. This is particularly problematic because DVB-H is based on time-slicing. With time-slicing mechanism, a terminal locks on a DVB-H channel, and does not receive data streams sent through other DVB-H channels. To be able to listen to several DVB-SI tables a terminal listens to several DVB-H channels, but this significantly reduces the effects of the power saving mechanism.

The present invention concerns a method in a broadcast network wherein a program is transported in a multicast packet, and wherein the multicast packet is transported in a stream, the stream being identified by a stream identifier, the method being adapted for getting a stream identifier corresponding to a stream, comprising at a terminal the steps of receiving a file comprising a list of programs available, selecting in the file a program and the corresponding multicast address, getting the Stream Identifier indicated in the multicast address and switching to the reception of packets corresponding to the Stream Identifier.
The multicast address is chosen in such a way the PID is encoded in it providing a simple mapping mechanism for the terminal. The PID is directly made available to the terminal on the selection of the multicast address.

According to an embodiment, the multicast packet is a multicast Internet Protocol packet.
According to an embodiment, the file is an Electronic Program Guide.
According to the embodiment, the broadcast network is a DVB-H network. The processing of DVB-SI information is no longer required at the terminal.

The invention concerns also a method in a broadcast network wherein a program is transported in a multicast IP packet, and wherein the multicast IP packet is transported in a stream, the stream being identified by an identifier, the method being adapted to indicate a stream identifier corresponding to a stream. The method comprises, at a service management device, the step of inserting the identifier into the multicast IP address, inserting the multicast IP address in an Electronic Service Guide and transmitting the Electronic Service Guide to a receiver of the program.

The invention will be better understood and illustrated by means of the following embodiment and execution examples, in no way limitative, with reference to the appended figures on which:
- Figure 1 is a block diagram of a system compliant with the embodiment;
- Figure 2 is a representation of the protocol stack, according to the prior art, of the DVB-H standard;
- Figure 3 is a representation of multicast address embedding the PID; and
- Figure 4 is a block diagram representing a terminal according to the embodiment.

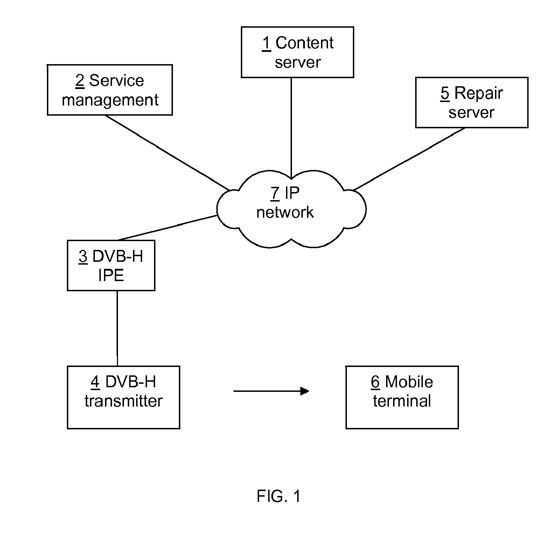

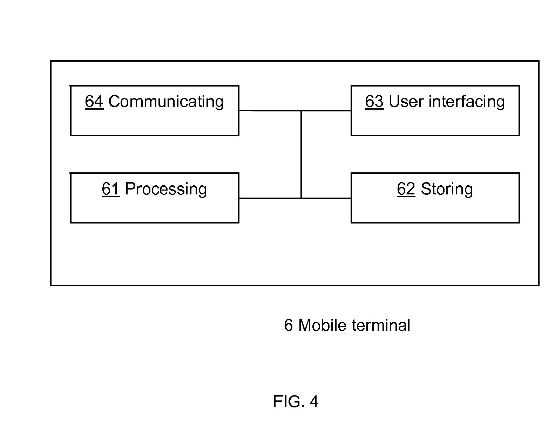

In Figure 1 and 4, the represented blocks are purely functional entities, which do not necessarily correspond to physically separate entities. Namely, they could be developed in the form of software, or be implemented in one or several integrated circuits.

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The figure 1 represents the system of the embodiment. The video broadcast network is compliant with the ETSI TR 102 469 V1.1.1 (2006-05), "Digital Video Broadcasting (DVB); IP Datacast over DVB-H: Architecture". It comprises a content server 1, a repair server 5, a service management device 2, and a DVB-H IP Encapsulator (IPE) 3, all interconnected through an IP network 7. The mechanism of the embodiment is implemented in the Service management device 2, which among other things manages and controls the IPE. The Service management device 2 is also well known to the skilled in the art as the head-end management system. The IPE is adapted to generate IP streams using the multicast IP address for carrying the DVB-PID. The IPE manages the IP encapsulation into MPEG-2 TS, under the control of the service management device. The service management device controls the Electronic Service Guide (ESG), as defined in the ETSI TR 102 469 V1.1.1 (2006-05) and the Session Description Protocol (SDP), as defined in RFC 2327. It controls the mapping of PID's to IP addresses.
The mechanism according to the embodiment is also implemented at the mobile terminal 6, also called the receiver hereinafter. It comprises means for looking for the PID in the multicast IP address. According to the embodiment, the mobile terminal is a DVB-H receiver. Of course the receiver might be any device that is adapted to receive the ESG according to the embodiment.

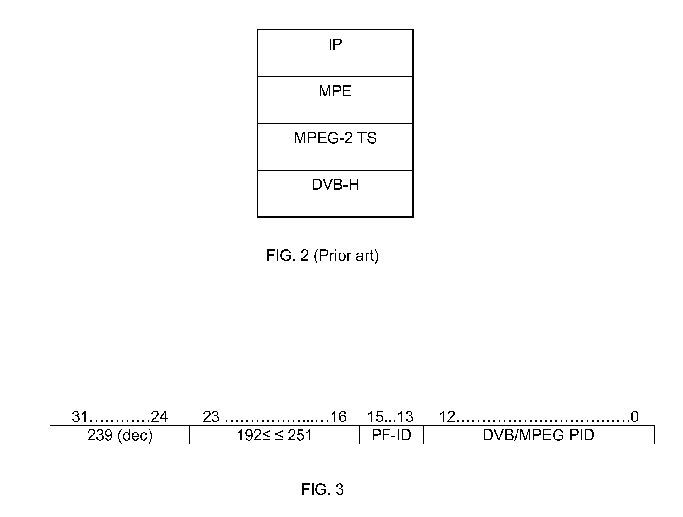

Figure 2 illustrates the protocol stack for delivering IP data on DVB-H transmission, as defined in document EN 301 192 V1.4.1 (2004-11) and ETSI TR 102 469 V1.1.1 (2006-05) cited hereinabove. MultiProtocol Encapsulation section, or MPE section, is used to transport IP datagram over an MPEG-2 transport stream. A platform ID allows having several IP addressing schemes within the same DVB-H multiplex. IP addresses/DVB-PID association is thus dependant on the platform ID.

Figure 3 illustrates the multicast IP address format according to the embodiment. The IPv4 address is depicted as follows. The two most significant bytes are reserved for targeting the right IP addressing range (between 239.192 and 239.251). The last 13 bits are used to encode the DVB-PID that permits a DVB-H receiver to get the corresponding packets. The most significant three bits of the third byte are optional. They are used to point to a platform, identified by its platform-ID, or PF-ID. It provides for up to eight different platforms sharing a DVB-H frequency/multiplex.

In the scope of IPv6 addressing scheme, only the most significant bytes of the 128 bits IPv6 address are used to signal a multicast IP address. The IPv4 scheme is embedded into the IPv6 address.

At the DVB-H receiver, the method to get the DVB-PID is as follows. The terminal is switched on. It listens to the DVB-H channel corresponding to the discovery/announcements service. This DVB-H channel transports the ESG. It also transports the Session announcement, as defined in the Session Announcement Protocol RFC 2974 (SAP), and the Session Description as defined in the SDP, intended to announce multimedia sessions. The ESG provides the receivers with information on various services available.
Usually a DVB-H operator chooses an IP address for the SAP announcement channel. If no IP address has been chosen by the DVB-H operator for this SAP announcement channel, the receiver listens to the standard IP address reserved for SAP announcement, 224.2.127.254. The receiver may also listen to the standard IP address reserved for the ESG, as specified in DVB-CBMS specification. This makes the terminal getting the DVB-SI tables in order to get the association tables. If an IP address has been chosen by the DVB-H operator, the operator indicates this IP address to the terminal. The receiver then gets the corresponding PID through the DVH-SI tables. It can then start listening to packets on this DVB-H channel. Those packets carry the SAP/SDP information and/or the ESG.
Once the ESG and/or the SDP file is acquired, the terminal gets the declaration of all programs (video, audio, data) having for each a corresponding multicast IP address. According to the user application, such as the Electronic program guide, the terminal selects a program. The terminal gets the associated IP address thanks to the ESG or the SDP file.
According to the embodiment, the terminal gets the corresponding PID by analyzing the IP address. The terminal can then directly switch to the corresponding DVB-H channel.
Once having got service information through SDP and/or ESG, the terminal switches to one particular service / DVB-H channel. The associated streams (video, audio, and data) correspond to multicast IP addresses compatible with the proposed scheme where the PID is embedded in the address. Therefore the terminal directly selects the right PID using the multicast IP address associated with the stream it wants to tune to as detailed hereinabove.

A receiver according to the embodiment is represented in figure 4. It is a receiver compliant with the DVB-H standards. It comprises a processor 61, a storing module 62, a communicating module 64 for sending and receiving data, and a user interface 63 for allowing an end user to manage and control the receiver. The user interface may be any well known user interface in the art. The modules of the receiver are well known modules of a DVB-H receiver. The processing means are adapted to get the PID address in the corresponding multicast IP address, according to the method of the embodiment.
Of course the receiver might also be a cellular terminal, according to IP Datacast over DVB-H standard ETSI TR 102 469 V1.1.1 (2006-05).

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.
Reference numerals appearing in the claims are by way of illustration only and shall have no limiting effect on the scope of the claims.

## Claims

1. Method in a broadcast network wherein a program is transported in a multicast packet, and wherein said multicast packet is transported in a stream, said stream being identified by a stream identifier, said method being adapted for getting a stream identifier corresponding to a stream, comprising at a terminal (6) the steps of:
- receiving a file comprising a list of programs available;
- selecting in said file a program and the corresponding multicast address and getting the Stream Identifier indicated in the multicast address; and
- switching to the reception of packets corresponding to said Stream Identifier.

2. Method according to the preceding claim, **characterized in that** the multicast packet is a multicast Internet Protocol packet.

3. Method according to the preceding claim, **characterized in that** said file is an Electronic Program Guide.

4. Method according to any one of the preceding claims, **characterized in that** the broadcast network is a DVB-H network

5. Method in a broadcast network wherein a program is transported in a multicast packet, and wherein said multicast packet is transported in a stream, said stream being identified by a stream identifier, said method being adapted to indicate a stream identifier corresponding to a stream, **characterized in that** it comprises at a service management device (2) the steps of:
- inserting said stream identifier into the multicast address;
- inserting said multicast address in an Electronic Service Guide; and
- transmitting said Electronic Service Guide to a receiver of the program.
